# FASCICULE DE BREVET EUROPEEN

(11) **EP 0 491 595 B1**
(45) Date de publication et mention de la délivrance du brevet: **11.05.1994**
(21) Numéro de dépôt: 91403297.4
(22) Date de dépôt: 06.12.1991
(51) Int. Cl.: B62B 3/10

(54) **Chariot de type emboîtable comportant une corbeille de transport, ainsi que des moyens de support pour une caisse ou autre objet volumineux**
Stapelbarer Einkaufswagen mit Transportkorb und Vorrichtung zur Ablage von Kasten oder anderem Gut
Shopping trolly of the nestable type comprising a carrier basket and means for supporting a box or other goods

(30) Priorité: 18.12.1990 FR 9015822
(43) Date de publication de la demande: 24.06.1992
(73) Titulaire: ATELIERS REUNIS CADDIE, F-67300 Schiltigheim (FR)
(72) Inventeur: Le Marchand, Alain, F-67116 Reichstett (FR)
(74) Mandataire: Boutin, Antoine

(56) Documents cités:
- EP-A- 0 349 423
- DE-A- 3 043 599
- US-A- 4 938 492

## Description

La présente invention concerne les chariots de type emboîtable comportant une corbeille de transport située à une certaine hauteur par rapport au sol. Pour permettre l'emboîtement de ces chariots les uns dans les autres lorsqu'ils ne sont pas utilisés, la paroi arrière de leur corbeille de transport est constituée par un volet monté librement pivotant à l'endroit de son bord supérieur.

Les chariots de ce genre sont destinés notamment à être utilisés comme chariots d'achat mis à la disposition de la clientèle dans les magasins à libre-service. En effet, la corbeille de transport de ces chariots est susceptible de recevoir de nombreuses marchandises placées en vrac à l'intérieur de celle-ci au fur et à mesure des achats. Cependant une telle corbeille n'est pas apte à recevoir une caisse ou autre objet volumineux, par exemple une caisse contenant des bouteilles de bière ou autres boissons. Pour le transport de tels objets, il n'est pas possible d'envisager l'adjonction d'un plateau de support qui serait disposé sous la corbeille ou derrière celle-ci. En effet, par sa simple présence à ces endroits, un tel plateau empêcherait l'emboîtement des chariots les uns à l'intérieur des autres lorsqu'ils sont en attente d'utilisation.

C'est pourquoi certains chariots d'achat sont pourvus d'un support supplémentaire susceptible d'être escamoté sous la corbeille de transport dans une position permettant l'emboîtement des chariots les uns dans les autres. Ainsi les chariots décrits dans les brevets US 2.890.058 et 2.903.269 comportent un support supplémentaire escamotable constitué par un plateau monté coulissant dans le sens longitudinal entre une position d'escamotage sous la corbeille de transport et une position d'utilisation dans laquelle il est dégagé en arrière de celle-ci.

Toutefois, les chariots de ce genre présentent un certain nombre d'inconvénients. L'un de ceux-ci réside dans le risque de coincement du plateau mobile ou similaire qui est ainsi prévu. Ces risques sont d'autant plus importants que le support de ce plateau est soumis à des chocs répétés lors de l'emboîtement des chariots les uns dans les autres. Or ces chocs sont de nature à provoquer des déformations des organes de coulissement et par suite des risques de coincement. Du reste, les moyens de montage et de guidage des supports supplémentaires ainsi prévus sont relativement fragiles. En conséquence, les manoeuvres répétées de déploiement et d'escamotage des plateaux mobiles provoquent très rapidement la mise hors d'usage de ceux-ci.

C'est pourquoi la présente invention a pour but de réaliser un chariot équipé d'un support supplémentaire pour le transport d'un objet volumineux, mais qui est conçu de façon à éviter les inconvénients des chariots mentionnés ci-dessus.

A cet effet, le chariot selon l'invention est caractérisé en ce que son châssis inférieur comporte des longerons latéraux s'étendant en arrière de la corbeille de transport sur une distance supérieure à la largeur des caisses ou autres objets volumineux à transporter, et les moyens prévus pour supporter ceux-ci consistent en deux éléments longitudinaux de support, en forme générale d'équerre, fixés contre le côté intérieur des longerons arrière, et dont l'aile horizontale est apte à recevoir et à supporter le bord correspondant d'une caisse ou similaire, les ailes horizontales de ces deux éléments laissant libres entre elles un espace dont la largeur est au moins légèrement supérieure à la largeur de la partie avant du châssis.

Ainsi, plusieurs chariots identiques de ce type peuvent être emboîtés les uns dans les autres malgré la présence des équerres de support ainsi prévues. Or, du fait même qu'elles sont fixes et directement solidarisées avec les éléments constitutifs du châssis inférieur, ces équerres sont extrêmement robustes et cette solution élimine les inconvénients des chariots antérieurs rappelés précédemment.

Dans une forme de réalisation avantageuse du présent chariot, chaque élément longitudinal de support est fixé sur le longeron arrière correspondant du châssis de façon à être en quelque sorte suspendu à ce longeron, l'aile horizontale constituant le support proprement dit étant ainsi située à un niveau inférieur à celui dudit longeron.

Un exemple de réalisation d'un chariot d'achat selon l'invention est décrit ci-dessous en référence aux dessins annexés à simple titre indicatif, et sur lesquels :

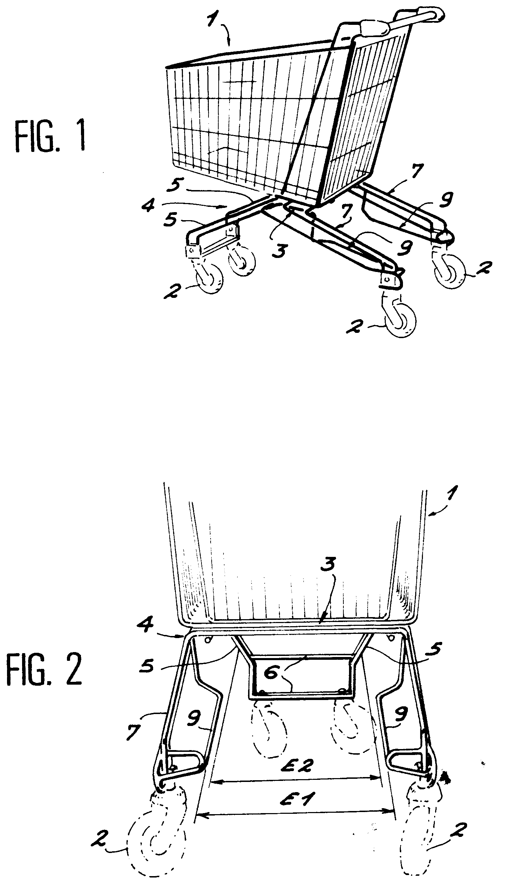

La figure 1 est une vue simplifiée en perspective d'un chariot selon l'invention.

La figure 2 est une vue en perspective de la partie arrière d'un tel chariot.

La figure 3 est une vue partielle en perspective représentant l'un des éléments supplémentaires de support de la partie correspondante du châssis inférieur du chariot.

La figure 4 est une vue en perspective représentant le présent chariot après mise en place d'un casier à bouteille sur les supports ainsi prévus à l'arrière.

La figure 5 est une vue en perspective illustrant le mode d'emboîtement de deux chariots selon l'invention.

Le chariot représenté comporte une corbeille de transport 1 disposée à une certaine hauteur au-dessus du niveau des roues 2. La paroi arrière de cette corbeille est constituée par un volet pivotant monté articulé à l'endroit de son bord supérieur afin de permettre l'engagement de l'extrémité avant de la corbeille d'un autre chariot identique lors de l'emboîtement de ces chariots. La poignée horizontale de manoeuvre du chariot est située à l'arrière de la corbeille 1 et à un niveau supérieur à celle-ci. A sa partie arrière, le fond de cette corbeille de transport 1 est fixé sur une sorte de plate-forme 3 faisant partie d'un châssis inférieur en fils métalliques qui est désigné par la référence générale 4. Dans sa partie avant, ce châssis comporte deux longerons latéraux 5 qui sont inclinés vers le bas en allant vers l'avant. Les extrémités avant de ces longerons sont réunies par des traverses 6 et elles portent les chapes de montage des roues avant 2.

A sa partie arrière, le châssis inférieur 4 comporte deux longerons similaires 7 en fils métalliques qui sont inclinés vers le bas en allant vers l'arrière. L'extrémité arrière de ces longerons porte les chapes de montage des roues arrière 2. Cependant, ces extrémités arrière ne sont reliées par aucune traverse afin de permettre l'emboîtement de plusieurs chariots les uns à l'intérieur des autres. Ainsi qu'il sera expliqué par la suite, les longerons arrière 7 présentent un écartement nettement plus important que les longerons avant 5 afin de permettre l'emboîtement de l'extrémité avant du châssis d'un chariot identique entre les longerons arrière d'un autre chariot.

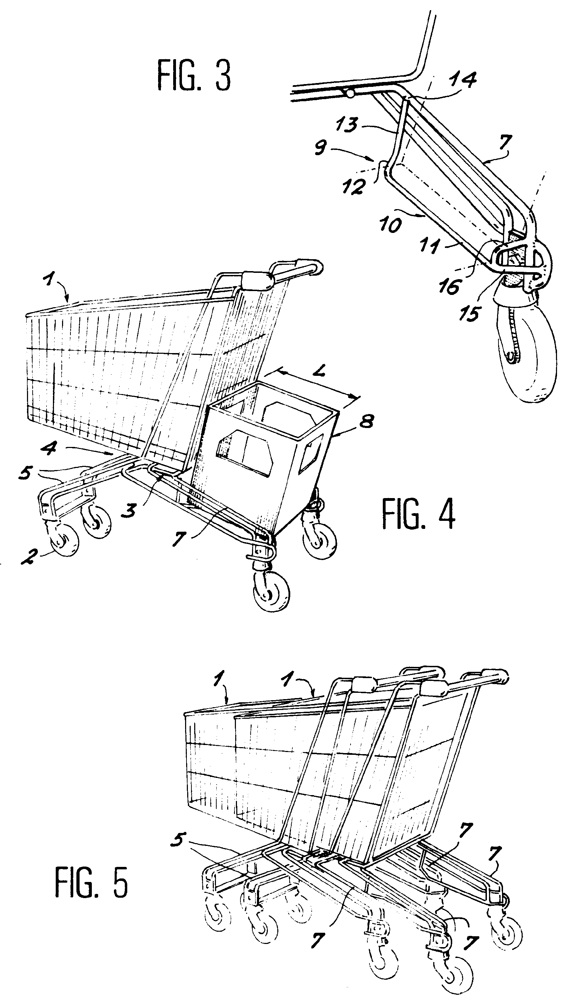

De plus, les longerons 7 s'étendent en arrière de la corbeille 1 sur une distance supérieure à la largeur L des objets volumineux à transporter, par exemple des casiers 8 à bouteilles (voir figure 4).

Les moyens de support prévus pour le transport de tels objets volumineux consistent en deux éléments longitudinaux 9 en forme générale d'équerre dont chacun est fixé contre le côté intérieur d'un longeron arrière 7. Ces éléments de support comportent chacun une aile horizontale 10 qui est apte à recevoir et à supporter le bord correspondant d'un casier 8 ou autre objet volumineux à transporter. Les ailes horizontales de ces deux éléments sont tournées l'une vers l'autre mais elles laissent entre elles un espace libre dont la largeur E1 est au moins légèrement supérieure à la largeur E2 de la partie avant du châssis 4, c'est-à-dire à l'écartement des longerons avant 5. C'est la raison pour laquelle les longerons arrière 7 doivent comporter un écartement nettement supérieur à celui des longerons avant, et ce d'une valeur supérieure à deux fois la largeur de l'aile horizontale 10 d'un support 9.

Dans ces conditions, la présence de ces supports ne gêne en aucune façon l'emboîtement de plusieurs chariots les uns à l'intérieur des autres comme représenté sur la figure 5. En effet dans un tel cas les longerons avant 5 du chariot situé à l'arrière peuvent librement s'engager entre les supports 9 en forme d'équerre prévus sur les longerons arrière 7 du chariot situé à l'avant.

Par ailleurs, il est sans inconvénient que le support supplémentaire ainsi prévu soit constitué par deux éléments 9 espacés l'un de l'autre, puisque ce support est destiné à recevoir, non pas des marchandises en vrac, mais un objet volumineux d'un seul tenant, tel qu'une caisse, un casier à bouteilles ou similaire. En conséquence, il suffit que cet objet soit soutenu sur deux bords opposés de son fond. Or ceci est bien le cas avec les éléments de support des chariots selon l'invention.

Dans l'exemple représenté, chacun des éléments 9 en forme d'équerre est constitué par un fil métallique 11 dont les extrémités sont coudées en direction du plan vertical passant par le longeron arrière correspondant 7 du châssis. Chacun de ces éléments est fixé sur ce longeron de façon à être en quelque sorte suspendu à celui-ci, son aile horizontale 10 étant ainsi située à un niveau inférieur à celui dudit longeron.

L'extrémité avant de chaque fil métallique 11 comporte une première partie 12 coudée dans un plan horizontal, puis une partie terminale 13 coudée verticalement vers le haut et dont l'extrémité 14 est fixée par soudure sur le longeron 7 correspondant.

Quant à l'extrémité arrière 15 de chaque fil métallique 11, elle est simplement coudée à l'horizontale en direction de l'extrémité du longeron arrière correspondant 7 pour être fixée en bout par soudure sur celui-ci. Cependant il est en plus prévu un petit arceau 16 en fil métallique qui part du coude arrière du fil métallique 11 pour rejoindre le longeron arrière correspondant 7 à un niveau supérieur. Ce petit arceau peut ainsi constituer une butée pour l'objet volumineux placé sur les deux éléments de support 9. Ceci empêche donc tout risque de glissement de cet objet vers l'arrière et par suite tout danger de chute de celui-ci au cours de son transport.

Cependant la réalisation des éléments longitudinaux de support prévus sur le présent chariot n'est pas limitée à l'exemple d'exécution décrit ci-dessus. En effet, au lieu d'être constitué par un fil métallique coudé, chacun de ces supports pourrait éventuellement consister en une tôle pliée en équerre ou une pièce moulée ou extrudée en matière plastique. Mais il serait également possible de prévoir plusieurs pattes coudées disposées les uns à la suite des autres sur chacun des longerons arrière 7 de façon à constituer des supports longitudinaux en forme d'équerre. En tout état de cause, ces supports doivent laisser libre entre eux un intervalle ayant une largeur supérieure à celle de la partie avant du châssis du chariot, pour les raisons déjà exposées précédemment.

Dans les divers cas envisagés ci-dessus, les supports prévus pourraient être rapportés sur le bâti de chariots du type en cause, après achèvement de la fabrication de ceux-ci, ou même éventuellement sur des chariots déjà existant pour autant que les longerons latéraux du châssis inférieur s'étendent sur une longueur suffisante vers l'arrière.

Le châssis inférieur du chariot selon l'invention pourrait avoir une structure autre que celle du chariot représenté sur les dessins annexés. Ainsi à la place d'une structure en fils métalliques, il serait possible de prévoir une structure en tubes métalliques de section quelconque ou bien en tubes ou profilés en toute autre matière appropriée. Mais dans chaque cas il est nécessaire qu'il y ait toujours des longerons 7 s'étendant en arrière de la corbeille de transport, afin que les éléments longitudinaux en forme d'équerre, ou équivalents, puissent être fixés sur ces longerons, ceux-ci pouvant être inclinés ou non suivant les cas.

Comme déjà indiqué, les chariots selon l'invention sont plus spécialement destinés à être utilisés comme chariots d'achat mis à la disposition de la clientèle dans les magasins en libre-service. Cependant ces chariots pourraient également être employés pour d'autres usages.

## Revendications

1. Chariot, notamment chariot d'achat, comportant une corbeille de transport fixée sur le châssis inférieur de ce chariot et disposée à une certaine hauteur au-dessus du niveau des roues, ainsi que des moyens de suport aptes à supporter, à l'arrière de cette corbeille, une caisse ou autre objet volumineux, caractérisé en ce que le châssis inférieur (4) comporte des longerons latéraux (7) s'étendant en arrière de la corbeille de transport (1) sur une distance supérieure à la largeur des caisses (8) ou autres objets volumineux à transporter, et les moyens prévus pour supporter ceux-ci consistent en deux éléments longitudinaux de support (9), en forme générale d'équerre, fixés contre le côté intérieur des longerons arrière (7) du châssis, et dont l'aile horizontale (10) est apte à recevoir et à supporter le bord correspondant d'une caisse ou similaire, les ailes horizontales de ces deux éléments laissant libres entre elles un espace dont la largeur (E1) est au moins légèrement supérieure à la largeur (E2) de la partie avant du châssis, de sorte que plusieurs chariots identiques de ce type peuvent être emboîtés les uns dans les autres malgré la présence des équerres de suport ainsi prévues.

2. Chariot selon la revendication 1, caractérisé en ce que chaque élément longitudinal de support (9) est fixé sur le longeron arrière correspondant (7) du châssis de façon à être en quelque sorte suspendu à ce longeron, l'aile horizontale (10) constituant le support proprement dit étant ainsi située à un niveau inférieur à celui dudit longeron (7).

3. Chariot selon la revendication 2, caractérisé en ce que chaque élément longitudinal de support (9) est constitué par un fil métallique (11) dont les extrémités sont coudées en direction du plan vertical passant par le longeron arrière correspondant (7) du châssis, l'extrémité avant comportant une partie terminale (13) coudée vers le haut et fixée en bout sur le longeron correspondant (7).

4. Chariot selon la revendication 3, caractérisé en ce que les longerons arrière (7) du châssis inférieur étant inclinés vers le bas en allant vers l'arrière, l'extrémité arrière (15) du fil métallique (11), constituant chaque élément longitudinal de support (9), est fixée sur l'extrémité respective du longeron correspondant, un élément de butée (16) étant en outre prévu pour retenir en place l'objet (8) transporté.

## Patentansprüche

1. Wagen, insbesondere Einkaufswagen, mit einem Transportkorb, der auf einem Fahrgestell des Wagens befestigt und auf einer bestimmten Höhe oberhalb der Ebene der Räder angeordnet ist, sowie mit einer im hinteren Bereich des Transportkorbes angeordneten Aufnahme für einen Kasten oder ein anderes sperriges Gut, dadurch gekennzeichnet, daß das Fahrgestell (4) seitliche Längsholme (7) aufweist, die sich im hinteren Bereich des Transportkorbes (1) über eine Strecke, die größer als die Breite des Kastens (8) oder anderer zu transportierender sperriger Güter ist, erstrecken, daß die Aufnahme für die Güter zwei winklig ausgebildete Längsträger (9) aufweist, die auf der Innenseite der hinteren Längsholme (7) des Fahrgestells befestigt sind und deren horizontale Schenkel (10) zur Aufnahme und Abstützung des entsprechenden Randes eines Kastens o. dgl. ausgebildet sind, und daß diese horizontalen Schenkel der zwei Längsträger zwischen sich einen Raum freilassen, dessen Breite (E1) ein wenig größer als die Breite (E2) des vorderen Bereichs des Fahrgestells ist, sodaß mehrere derartige Wagen trotz der vorgesehenen winkligen Längsträger ineinanderschiebbar sind.

2. Wagen nach Anspruch 1, dadurch gekennzeichnet, daß jeder Längsträger (9) an dem jeweiligen hinteren Längsholm (7) des Fahrgestells so aufgehängt ist, daß sich der horizontale Schenkel (10), der die Aufnahme bildet, in einer Ebene unterhalb des Längsholmes (7) befindet.

3. Wagen nach Anspruch 2, dadurch gekennzeichnet, daß jeder Längsträger (9) aus einer metallischen Strebe (11) besteht, deren Endbereiche in die Richtung auf eine vertikale Ebene durch den jeweiligen hinteren Längsholm (7) des Fahrgestells umgebogen sind und deren vorderer Endbereich ein nach oben abgewinkeltes Anschlagstück (13) aufweist, das mit seinem freien Ende an dem jeweiligen Längsholm (7) befestigt ist.

4. Wagen nach Anspruch 3, dadurch gekennzeichnet, daß die hinteren Längsholme (7) des Fahrgestells nach hinten zum Boden abfallend geneigt sind, daß das hintere Ende (15) der metallischen Strebe (11) jedes Längsträgers (9) am Ende des jeweiligen Längsholms (7) befestigt ist, und daß weiterhin ein Anschlag (16) zur Sicherung des transportierten Gutes an seinem Platz vorgesehen ist.

## Claims

1. A trolley, namely a shopping trolley, comprising a carrying basket fixed on the under-frame of this trolley and disposed at a certain height above the level of the wheels, as well as the means of support appropriate for supporting, at the rear of this basket, a box or other voluminous object, characterised in that the under-frame (4) comprises lateral bars (7) extending behind the carrying basket (1) over a distance greater than the width of the boxes (8) or other voluminous objects which are to be carried, and the means provided to support these objects comprising two longitudinal support elements (9), in the general form of an angle, which elements are fixed against the inner side of the rear bars (7) of the frame, and the horizontal wing (10) of which elements is appropriate for receiving and supporting the corresponding side of a box or similar, the horizontal wings of these two elements leave a space free between them the width (E1) of which space is at least slightly greater than the width (E2) of the front part of the frame so that several identical trolleys of this type can be fitted together one inside the other despite the presence of the support angles thus provided.

2. A trolley according to claim 1, characterised in that each longitudinal support element (9) is fixed on the corresponding rear bar (7) of the frame in such a way as to be suspended, as it were, at this bar, the horizontal wing (10) constituting the actual support being thus situated at a lower level than that of the said bar (7).

3. A trolley according to claim 2, characterised in that each longitudinal support element (9) is comprised of a metallic wire (11) the extremities of which are bent in the direction of the vertical plane passing through the corresponding rear bar (7) of the frame, the front extremity comprising an end portion (13) bent upwards and fixed at the end to the corresponding bar (7).

4. A trolley according to claim 3, characterised in that the rear bars (7) of the under-frame being inclined downwards towards the rear, the rear extremity (15) of the metallic wire (11), constituting each longitudinal support element (9), is fixed on the respective extremity of the corresponding bar, a stop element (16) being moreover provided to keep the carried object (8) in place.
